# EUROPEAN PATENT APPLICATION

(11) **EP 2 693 779 A1**
(43) Date of publication of application: **05.02.2014**
(21) Application number: 11862215.8
(22) Date of filing: 21.11.2011
(51) Int. Cl.: H04W 4/12, H04W 88/18

(54) **METHOD, APPARATUS AND SYSTEM FOR FORWARDING A MULTIMEDIA MESSAGE AND APPARATUS FOR RECEIVING THE MULTIMEDIA MESSAGE**

(30) Priority: 31.03.2011 CN 201110079934
(71) Applicant: ZTE Corporation, Shenzhen, Guangdong 518057 (CN)
(72) Inventor: LUO, Wenping, Shenzhen Guangdong 518057 (CN)
(74) Representative: Bongiovanni, Simone
(86) International application number: PCT/CN2011/082572
(87) International publication number: WO 2012/129917

(57) **Abstract**

The present invention provides a method, an apparatus and a system for forwarding a multimedia message and an apparatus for receiving a multimedia message. The method includes: a first terminal acquiring, in response to a forwarding operation of a user, a multimedia message notification message of a multimedia message to be forwarded; the first terminal transmitting a port short message to a second terminal, wherein the multimedia message notification message is carried in the port short message; and the second terminal receiving the port short message, extracting the multimedia message notification message from the port short message and downloading the multimedia message according to the multimedia message notification message. The technical solution provided by the present invention solves the problem of unnecessary data traffic, network resource consumption and the like which are generated in the process of forwarding a multimedia message in related technologies, thus achieving the effect of forwarding a multimedia message by a multimedia message forwarding party under the condition that no data traffic is generated.

## Description

### Technical Field

The present invention relates to the field of communications, and in particular, to a method, an apparatus and a system for forwarding a multimedia message and an apparatus for receiving a multimedia message.

### Background

A multimedia message service can transmit multimedia data including text, pictures, audios, videos and so on, which is its main feature and use. The multimedia message service is deeply loved by a majority of users due to its rich multimedia contents and representations.

When a user receives a multimedia message or a multimedia message notification message, the following situations may occur: (1) the user wants to share the multimedia message with others; (2) if a multimedia message notification is received by a cell phone with a small screen and low resolution, the user wants to view contents of the multimedia message with another cell phone with a big screen and high resolution; and (3) a function similar to call forwarding is required, multimedia forwarding is added to the cell phone terminal, when a multimedia message is forwarded from one cell phone to another cell phone, requirements will be proposed regarding multimedia message forwarding.

Multimedia message transceiving includes multimedia message transmitting and multimedia message downloading. Before downloading a multimedia message, a multimedia message notification message is received first, which mainly carries important information such as the storage location of the multimedia message, a validity period, the size of the multimedia message and so on. The multimedia message notification message is a push message, which is pushed to the receiver cell phone via a short message service center (SMSC) by a multimedia message service center server (MMSC server) and carried in a short message.

Currently, there are two methods for forwarding a multimedia message. In the first method, after a user A has downloaded a multimedia message, the user edits this multimedia message and then transmits this multimedia message to a user B. In the second method, a user A requests to forward a multimedia message on the server by way of transmitting an M-Forward.req protocol data unit (PDU) to a multimedia message service center (MMSC). Both these two methods have one shortcoming, i.e., the user A must participate in data interaction, whether to directly edit a multimedia message and then transmit the multimedia message in the first method or to transmit a forwarding request to the multimedia message service center in the second method, it is a data service interaction process and will generate unnecessary data traffic and network resource consumption. Aiming at the problem in the related art, no effective solution has been presented currently.

### Summary

Aiming at the problem of unnecessary data traffic, network resource consumption and the like which are generated in the process of forwarding a multimedia message in related technologies, the present invention provides a method, an apparatus and a system for forwarding a multimedia message and an apparatus for receiving a multimedia message, so as to at least solve the above-mentioned problem.

According to one aspect of the present invention, a method for forwarding a multimedia message is provided, including: a first terminal acquiring, in response to a forwarding operation of a user, a multimedia message notification message of a multimedia message to be forwarded; the first terminal transmitting a port short message to a second terminal, wherein the multimedia message notification message is carried in the port short message; and the second terminal receiving the port short message, extracting the multimedia message notification message from the port short message, and downloading the multimedia message according to the multimedia message notification message.

Before the first terminal transmits the port short message to the second terminal, the method further includes: performing port registration in the first terminal, and adding a port number corresponding to a registered port to a first port application list; and
the first terminal transmitting the port short message to the second terminal includes: the first terminal determining the port short message to be transmitted according to the port number and transmitting the port short message to the second terminal.

The first terminal determines the port short message to be transmitted according to the port number in the following manner: the first terminal adding the port number to a port information unit of a user data header of a short message to obtain the port short message, wherein the port short message further includes a user data portion.

The user data portion is obtained in the following manner: setting first two bytes as a message content flag, and taking the multimedia message notification message as a user data bearer portion.

After performing port registration in the first terminal, the method further includes: modifying a transmitter number of a protocol data unit (PDU) in the multimedia message notification message as the number of the first terminal.

Before the first terminal transmits the port short message to the second terminal, the method further includes: under a condition that the size of the multimedia message notification message in the port short message is determined to be greater than a predetermined value, transmitting the multimedia message notification message in segments; and when the second terminal receives the port short message, the method further includes: under the condition that the size of the multimedia message notification message in the received port short message is determined to be greater than the predetermined value, receiving the segments of the multimedia message notification message and assembling the segments of the multimedia message notification message.

Before the second terminal receives the port short message, the method further includes: performing port registration in the second terminal, and adding a port number corresponding to a registered port to a second port application list.

According to another aspect of the present invention, an apparatus for forwarding a multimedia message is provided, including: an receiving module, configured to acquire, in response to a forwarding operation of a user, a multimedia message notification message of a multimedia message to be forwarded; and a transmitting module, configured to transmit a port short message which carries the multimedia message notification message so that a receiver of the port short message downloads the multimedia message.

The apparatus further includes: a registration module, configured to perform port registration in a terminal and add a port number corresponding to a registered port to a first port application list; a determination module, configured to determine a port short message to be transmitted according to the port number; and the transmitting module is configured to transmit the port short message which is determined to be transmitted.

The apparatus further includes: a short message encoding module, configured to modify a transmitter number of a protocol data unit (PDU) in the multimedia message notification message as the number of the apparatus.

According to still another aspect of the present invention, an apparatus for receiving a multimedia message is provided, including: a receiving module, configured to receive a port short message and extract a multimedia message notification message from the port short message; and a downloading module, configured to download a multimedia message corresponding to the multimedia message notification message according to the multimedia message notification message.

According to still another aspect of the present invention, a system for forwarding a multimedia message is provided, including: a first terminal and a second terminal, wherein the first terminal is configured to acquire, in response to a forwarding operation of a user, a multimedia message notification message, and transmit a port short message to a second terminal, wherein the multimedia message notification message is carried in the port short message; and the second terminal is configured to receive the port short message and extract the multimedia message notification message from the port short message, to complete multimedia message downloading.

By way of the present invention, the problem of unnecessary data traffic, network resource consumption and the like which are generated in the process of forwarding a multimedia message in related technologies is solved through a technical solution that a transmitter terminal transmits to a receiver terminal a port short message carrying a multimedia message notification message, thus achieving the effect of realizing multimedia message forwarding by the multimedia message forwarding party without generating any data traffic.

### Brief Description of the Drawings

Drawings, provided for further understanding of the present invention and forming a part of the specification, are used to explain the present invention together with embodiments of the present invention rather than to limit the present invention, wherein:
Fig. 1 is a flowchart of a method for forwarding a multimedia message according to an embodiment of the present invention;
Fig. 2 is a schematic flowchart of forwarding a multimedia message notification message according to an example of the present invention;
Fig. 3 is a schematic diagram of a user header data structure with a port number according to an example of the present invention;
Fig. 4 is a schematic flowchart of receiving a multimedia message notification message according to an example of the present invention;
Fig. 5 is a structural block diagram of an apparatus for forwarding a multimedia message according to an embodiment of the present invention;
Fig. 6 is a structural block diagram of an apparatus for forwarding a multimedia message according to a preferred embodiment of the present invention;
Fig. 7 is a structural block diagram of an apparatus for receiving a multimedia message according to an embodiment of the present invention;
Fig. 8 is a structural block diagram of a system for forwarding a multimedia message according to an embodiment of the present invention; and
Fig. 9 is a structural block diagram of a system for forwarding a multimedia message according to a preferred embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

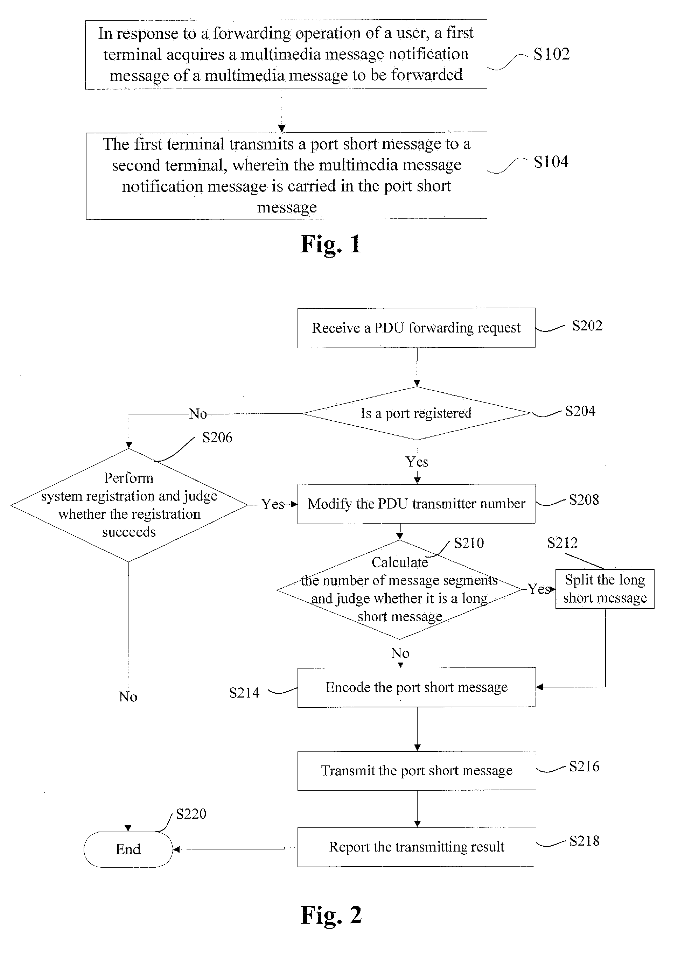

Fig. 1 is a flowchart of a method for forwarding a multimedia message according to an embodiment of the present invention. As shown in Fig. 1, the method includes:
Step S102, in response to a forwarding operation of a user, a first terminal acquires a multimedia message notification message of a multimedia message to be forwarded;
Step S104, the first terminal transmits a port short message to a second terminal, wherein the multimedia message notification message is carried in the port short message; and
Step S 106, the second terminal receives the port short message, extracts the multimedia message notification message from the port short message, and downloads the multimedia message according to the multimedia message notification message.

In the above-mentioned embodiment, since the purpose of multimedia message forwarding is realized by directly transmitting a multimedia message notification message to the receiver cell phone through a port short message so that the receiver cell phone completes downloading, there is no need to download a multimedia message or transmit a forwarding request to the multimedia message service center by the terminal which needs to forward the multimedia message, which makes the best of the feature of the short message, i.e., being simple and rapid, and thus achieves the effect of forwarding a multimedia message without generating any data traffic.

During specific implementation, before Step S 104, port registration has to be completed, which specifically includes the following flow: port registration is performed in a first terminal, and a port number corresponding to a registered port is added to a first port application list. By way of introducing a port number, different applications can be distinguished from each other in the situation where a terminal has a plurality of applications (such as java client).

During specific application, the first terminal may determine a port short message to be transmitted according to the port number, and transmits the port short message to the second terminal. During specific implementation, the first terminal may determine the port short message to be transmitted according to the port number in the following manner: the first terminal adds the port number to a port information unit of a user data header of a short message to obtain the port short message, wherein the port short message also includes a user data portion.

During preferred implementation, the user data portion may be obtained in the following manner: the first two bytes are set as a message content flag, and the multimedia message notification message is taken as a user data bearer portion.

During preferred implementation, the method for forwarding a multimedia message may also include the step that: a transmitter number of a protocol data unit (PDU) in the multimedia message notification message is modified as the number of the first terminal. During specific application, this step may be performed after the port registration has been performed in the first terminal. This step can be used to enable the second terminal to recognize which terminal forwards the multimedia message, and in this embodiment, it is the first terminal which forwards the multimedia message.

During specific application, the method for forwarding a multimedia message may also segment a long short message, which specifically includes the following processing: in a situation where the size of the multimedia message notification message in the port short message is determined to be greater than a predetermined value, the multimedia message notification message is transmitted in segments; and during specific implementation, this step can be performed before the first terminal transmits the port short message to the second terminal. Correspondingly, when the second terminal receives the port short message, under the condition that the size of the multimedia message notification message in the received port short message is greater than the predetermined value, the segments of the multimedia message notification message are received and are assembled after the reception is completed.

During specific implementation, the method for forwarding a multimedia message may also include the following processing: port registration is performed in the second terminal, and a port number corresponding to a registered port is added to a second port application list. During specific application, this procedure may be performed before the second terminal receives the port short message.

For better understanding the above-mentioned embodiment, detailed description will be provided in conjunction with relevant figures and particular examples hereinafter.

Fig. 2 is a schematic flowchart of forwarding a multimedia message notification message according to an example of the present invention. As shown in Fig. 2, the flow includes the following steps.

Step S202, a transmitter terminal (equivalent to the above-mentioned first terminal) receives a forwarding request, and acquires a protocol data unit (PDU) of a multimedia message notification message, wherein the forwarding request may include a forwarding operation of a user and so on.

Step S204, whether a system port has registered is detected, if no, proceed to Step S206 for registration; otherwise, proceed to Step S208. It needs to be noted that the system in this example is described with respect to the transmitter terminal.

Step S206, system registration is performed, and whether the registration has succeeded is judged, if the registration succeeds, the port number designated by the system is added to a port application list, and proceed to Step S208, and if the registration has failed, proceed to Step S220.

Step S208, a PDU transmitter number is modified. In this step, a 0x89 field in the PDU is searched, if the searching has failed, "0x89 + encoded local terminal number" is added to the PDU header; and if the searching succeeds, the field value after the original 0x89 byte is modified to the encoded local terminal number, and proceed to Step S210.

Step S210, whether it is required to split the message into a plurality of segments for transmitting is calculated according to the length of the PDU bytes in accordance with the short message protocol, and if yes, proceed to Step S212, otherwise, proceed to Step S214.

Step S212, the original PDU is split into a plurality of sub-PDU segments according to the maximum text length specified by the short message protocol, and proceed to Step S214.

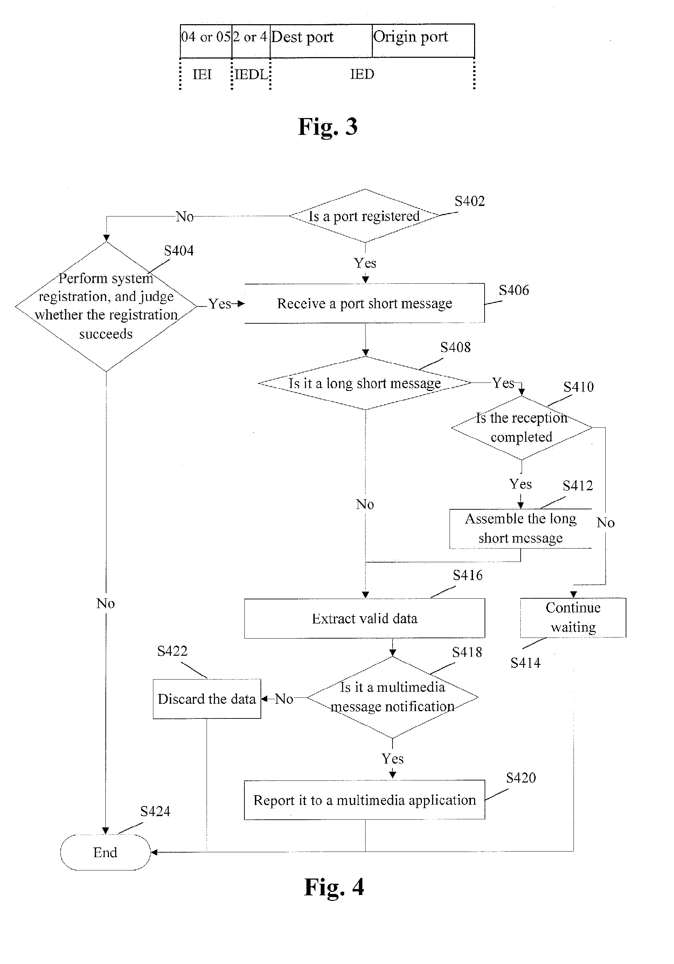

Step S214, the port short message is encoded. In this step, the port number is stored in a certain information unit of the user data header (TP-UDH) of the short message, and the structure thereof is as shown in Fig. 3. There are two kinds of port numbers, 8-bit and 16-bit. If an 8-bit port number is used, IEI value is 04, the original port number (Original Port) and the destination port number (Dest port) occupy one byte respectively, and at this moment, the IEDL value is 2. In this step, a 16-bit port number is used, IEI value is 05, IEDL value is 4, and the original port number (Original Port) and the destination port number (Dest port) occupy two bytes respectively. With respect to the user data portion, the first two bytes are set as message content flag bytes 0x8C 0x82 (two bytes), and the PDU of the entire multimedia message notification message is taken as the user data bearer portion immediately following the flag bytes. Therefore, the user data bearer portion takes two continuous bytes 0x8C 0x82 at the beginning as a flag. After this step is completed, Step S216 is executed.

Step S216, a wireless interface provided by an underlying layer is invoked to transmit the port short message, and proceed to Step S218.

Step S218, after a network response is received (i.e., transmitting result information is received from the short message service center), the transmitting result or state is reported to the requester application (i.e., an application of the transmitter terminal).

Step S220, the flow ends.

Fig. 4 is a schematic flowchart of receiving a multimedia message notification message according to an example of the present invention. It needs to be noted that the system in this example is described with respect to the receiver terminal. As shown in Fig. 4, the flow includes the following steps.

Step S402, whether the system has registered a port number is detected first, and if no, proceed to Step S404, otherwise, proceed to Step S406.

Step S404, system registration is performed, the port number designated by the system is added to a port application list, and proceed to Step S406.

Step S406, a port short message is received, and proceed to Step S408.

Step S408, whether the current short message is a long short message is judged according to the user data header, and if it is a long short message, proceed to Step S410, otherwise, proceed to Step S414.

Step S410, a local cache is searched, whether all the segments of this long short message are received completely is judged, if yes, proceed to Step S412, otherwise, proceed to Step S414.

Step S412, the short message data are assembled in sequence according to the segment number in the user data header, and proceed to Step S416.

Step S414, continue waiting.

Step S416, the user data header is peeled off to extract valid data, i.e., the user bearer data portion, and proceed to Step S418.

Step S418, whether the user bearer data takes two continuous bytes 0x8C 0x82 as the beginning is checked, i.e., whether it is a multimedia message notification message is judged, and if yes, proceed to Step S420, otherwise, proceed to Step S422.

Step S420, the first 0x8C 0x82 (two bytes) of the user data bearer portion is removed, and the entire remaining portion is reported to a multimedia message application, and proceed to Step S424.

Step S422, the data are discarded.

Step S424, the flow ends.

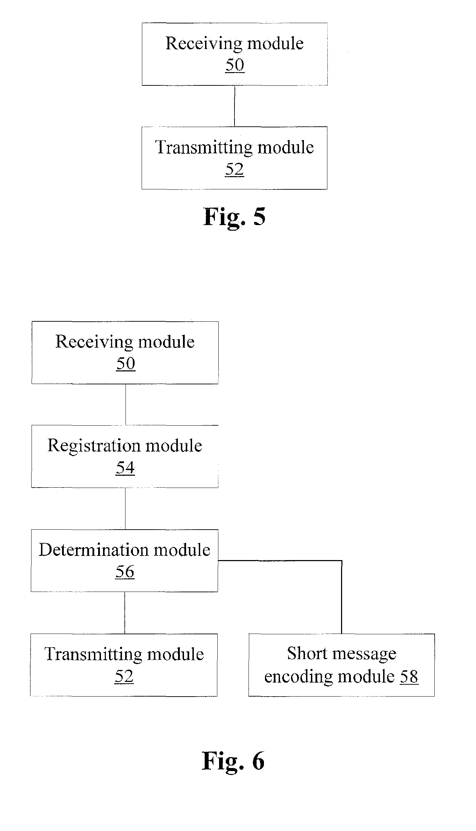

Fig. 5 is a structural block diagram of an apparatus for forwarding a multimedia message according to an embodiment of the present invention. As shown in Fig. 5, the apparatus includes: a receiving module 50, configured to acquire, in response to a forwarding operation of a user, a multimedia message notification message of a multimedia message to be forwarded; and
a transmitting module 52, coupled with the receiving module 50 and configured to transmit a port short message which carries the multimedia message notification message so that the receiver of the port short message downloads the multimedia message.

During specific application, as shown in Fig. 6, the above-mentioned apparatus may further include: a registration module 54, coupled with the receiving module 50 and configured to perform port registration in a terminal and add a port number corresponding to a registered port to a first port application list; a determination module 56, coupled with the registration module 54 and configured to determine a port short message to be transmitted according to the port number; and accordingly, the transmitting module 52 is coupled with the determination module 56 and configured to transmit the port short message which is determined to be transmitted.

During specific implementation, the determination module 56 may determine the port short message to be transmitted according to the port number in the following manner: the port number is added to a port information unit of a user data header of a short message to obtain the port short message. Of course, the port short message may also include a user data portion. The user data portion is obtained in the following manner: the first two bytes are configured as a message content flag, and the multimedia message notification message is taken as a user data bearer portion.

During preferred implementation, as shown in Fig. 6, the above-mentioned apparatus may further include: a short message encoding module 58, coupled with the determination module **56** and configured to modify a transmitter number of a protocol data unit (PDU) in the multimedia message notification message as the number of the above-mentioned apparatus (i.e., the apparatus for forwarding a multimedia message). The short message encoding module **58** can be used to enable the multimedia message receiver to recognize which terminal forwards the multimedia message, and in this embodiment, it is the first terminal which forwards the multimedia message.

It needs to be noted that the preferred working modes of various modules in the above-mentioned apparatus for forwarding a multimedia message can be made reference to the description of the relevant method embodiments, which will not be described here.

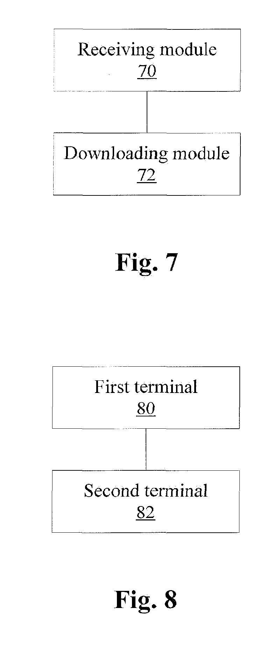

Fig. 7 is a structural block diagram of an apparatus for receiving a multimedia message according to an embodiment of the present invention. As shown in Fig. 7, the apparatus for receiving a multimedia message includes:
a receiving module **70,** configured to receive a port short message and extract a multimedia message notification message from the port short message; and a downloading module **72,** configured to download a multimedia message corresponding to the multimedia message notification message according to the multimedia message notification message.

During specific implementation, the above-mentioned apparatus for receiving a multimedia message may also include a registration module, configured to perform port registration and add a port number corresponding to a registered port into a second port application list.

It needs to be noted that the preferred working modes of various modules in the above-mentioned apparatus for receiving a multimedia message can be made reference to the description of the relevant method embodiments which include but not limited to the embodiment shown in Fig. 4, which will not be described here.

Fig. 8 is a structural block diagram of a system for forwarding a multimedia message according to an embodiment of the present invention. As shown in Fig. 8, the system includes: a first terminal **80** and a second terminal **82,** wherein the first terminal **80** is configured to acquire, in response to a forwarding operation of a user, a multimedia message notification message, and transmit a port short message to the second terminal, wherein the multimedia message notification message is carried in the port short message; and the second terminal **82** is configured to receive the port short message and extract the multimedia message notification message from the port short message, to complete multimedia message downloading.

It needs to be noted that during specific application, regarding function realization, the first terminal 80 in this embodiment may include but not limited to the functions realized by various modules in the apparatus embodiments shown in Figs. 5 and 6, and regarding hardware constitution, may include but not limited to various modules in the apparatus embodiments shown in Figs. 5 and 6. Regarding function realization, the second terminal **82** in this embodiment may include but not limited to the functions realized by various modules in the apparatus embodiment shown in Fig. 7, and regarding hardware constitution, may include but not limited to various modules in the apparatus embodiment shown in Fig. 7.

For better understanding the embodiment shown in Fig. 8, detailed description will be provided in conjunction with relevant figures and particular examples hereinafter.

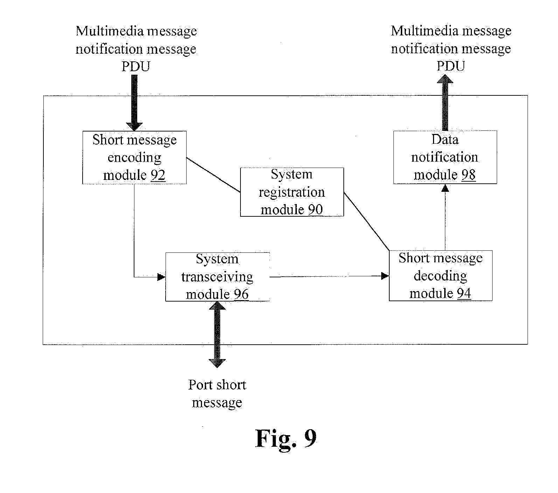

Fig. 9 is a structural block diagram of a system for forwarding a multimedia message according to a preferred embodiment of the present invention. As shown in Fig. 9, the system includes the following modules.

A system registration module **90** is configured to register a port number during system installation or startup, and log off this port number during exit or uninstall. After the port number has been registered, the short message transmitted to this port number will be received by the system. Since there may be a plurality of applications running in the same cell phone at the same time, in order to distinguish different applications during short message transceiving, a port number mechanism is introduced into the short message, which is similar to the port number concept in the TCP/IP protocol. After receiving the short message, the cell phone transmits this short message to an application corresponding to the port number if it is found out that it is a port short message and this port number has been registered in the registry by way of automatic searching. The system registration module **90** in this example designates a dedicated port number, and all such systems use this uniform port number.

An encoding module **92** is configured to encode a port number, modify or add a transmitter number in the PDU of the multimedia message notification message, take the modified PDU as the valid bearer data of the port short message and encapsulate user data according to the port short message protocol.

A decoding module **94,** i.e. the inverse operation of the encoding module, is mainly configured to extract the valid bearer data and judge whether the current short message is a long short message and so on. If it is a long short message, whether all the segments are received completely is judged, and if yes, the segments are assembled, and then the valid data are extracted.

A system transceiving module **96** is configured to invoke the underlying interface to transmit and receive the port short message.

A data notification module **98** is configured to report the extracted valid bearer data, i.e. the PDU in the multimedia message notification message, to a multimedia message application.

It can be seen from this example that the modules in the system of the present invention can include but not limited to the functions realized by the modules in the embodiments shown in Figs. 5, 6, 7 and 8.

From the description above, it can be seen that the present invention achieves the following technical effects.

In the present invention, since the purpose of multimedia message forwarding is realized by directly transmitting a multimedia message notification message to the receiver cell phone through a port short message so that the receiver cell phone completes downloading, there is no need to download a multimedia message or transmit a forwarding request to the multimedia message service center by the terminal which needs to forward the multimedia message, which makes the best of the feature of the short message, i.e., being simple and rapid, and thus achieves the effect of forwarding a multimedia message without generating any data traffic.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for forwarding a multimedia message, **characterized by** comprising:
a first terminal acquiring, in response to a forwarding operation of a user, a multimedia message notification message of a multimedia message to be forwarded;
the first terminal transmitting a port short message to a second terminal, wherein the multimedia message notification message is carried in the port short message; and
the second terminal receiving the port short message, extracting the multimedia message notification message from the port short message, and downloading the multimedia message according to the multimedia message notification message.

2. The method according to Claim 1, **characterized in that**
before the first terminal transmits the port short message to the second terminal, the method further comprises: performing port registration in the first terminal, and adding a port number corresponding to a registered port to a first port application list; and
the first terminal transmitting the port short message to the second terminal comprises: the first terminal determining the port short message to be transmitted according to the port number and transmitting the port short message to the second terminal.

3. The method according to Claim 2, **characterized in that** the first terminal determines the port short message to be transmitted according to the port number in the following manner: the first terminal adding the port number to a port information unit of a user data header of a short message to obtain the port short message, wherein the port short message further comprises a user data portion.

4. The method according to Claim 3, **characterized in that** the user data portion is obtained in the following manner:
setting first two bytes as a message content flag, and taking the multimedia message notification message as a user data bearer portion.

5. The method according to any one of Claims 2 to 4, **characterized in that** after performing port registration in the first terminal, the method further comprises:
modifying a transmitter number of a protocol data unit (PDU) in the multimedia message notification message as the number of the first terminal.

6. The method according to any one of Claims 1 to 4, **characterized in that** before the first terminal transmits the port short message to the second terminal, the method further comprises: under a condition that the size of the multimedia message notification message in the port short message is determined to be greater than a predetermined value, transmitting the multimedia message notification message in segments; and
when the second terminal receives the port short message, the method further comprises: under the condition that the size of the multimedia message notification message in the received port short message is determined to be greater than the predetermined value, receiving the segments of the multimedia message notification message and assembling the segments of the multimedia message notification message.

7. The method according to any one of Claims 1 to 4, **characterized in that** before the second terminal receives the port short message, the method further comprises:
performing port registration in the second terminal, and adding a port number corresponding to a registered port to a second port application list.

8. An apparatus for forwarding a multimedia message, **characterized by** comprising:
an receiving module, configured to acquire, in response to a forwarding operation of a user, a multimedia message notification message of a multimedia message to be forwarded; and
a transmitting module, configured to transmit a port short message which carries the multimedia message notification message so that a receiver of the port short message downloads the multimedia message.

9. The apparatus according to Claim 8, **characterized in that** the apparatus further comprises:
a registration module, configured to perform port registration in a terminal and add a port number corresponding to a registered port to a first port application list;
a determination module, configured to determine a port short message to be transmitted according to the port number; and
the transmitting module is configured to transmit the port short message which is determined to be transmitted.

10. The apparatus according to Claim 8, **characterized by** further comprising:
a short message encoding module, configured to modify a transmitter number of a protocol data unit (PDU) in the multimedia message notification message as the number of the apparatus.

11. An apparatus for receiving a multimedia message, **characterized by** comprising:
a receiving module, configured to receive a port short message and extract a multimedia message notification message from the port short message; and
a downloading module, configured to download a multimedia message corresponding to the multimedia message notification message according to the multimedia message notification message.

12. A system for forwarding a multimedia message, **characterized by** comprising: a first terminal and a second terminal, wherein
the first terminal is configured to acquire, in response to a forwarding operation of a user, a multimedia message notification message, and transmit a port short message to a second terminal, wherein the multimedia message notification message is carried in the port short message; and
the second terminal is configured to receive the port short message and extract the multimedia message notification message from the port short message, to complete multimedia message downloading.
